# EUROPÄISCHE PATENTSCHRIFT

(11) **EP 2 860 554 B1**
(45) Veröffentlichungstag und Bekanntmachung des Hinweises auf die Patenterteilung: **29.06.2016**
(21) Anmeldenummer: 14181730.4
(22) Anmeldetag: 21.08.2014
(51) Int. Cl.: G02B 3/00, G01V 8/20

(54) **Verfahren zur Herstellung eines optoelektronischen Sensors**
Method for producing an optoelectronic sensor
Procédé de fabrication d'un capteur opto-électronique

(30) Priorität: 11.10.2013 DE 102013111255
(43) Veröffentlichungstag der Anmeldung: 15.04.2015
(73) Patentinhaber: SICK AG, 79183 Waldkirch (DE)
(72) Erfinder: Eble, Johannes, 79183 Waldkirch (DE); Matt, Sebastian, 77796 Mühlenbach (DE)
(74) Vertreter: Hehl, Ulrich

(56) Entgegenhaltungen:
- WO-A1-2010/111465
- DE-A1-102006 019 717
- JP-A- H09 284 617
- KR-B1- 100 854 748
- US-A1- 2008 130 144

## Beschreibung

Die Erfindung betrifft ein Verfahren zur Herstellung eines optoelektronischen Sensors.

Ein solches optisches Modul dient dazu, das oft als Linse ausgebildete strahlformende Element gegenüber einem anderen Element zu positionieren, wie einer Strahlungsquelle oder einem Empfangselement. Das optische Modul enthält neben der Linse häufig einen Tubus, welcher internen Lichtweg zwischen Linse und Lichtsender beziehungsweise Lichtempfänger abschirmt.

Ein Beispiel für ein System, in dem optische Module eingesetzt werden, ist ein optoelektronischer Sensor. Dazu zählen Lichtschranken, die nach dem Prinzip arbeiten, einen Lichtstrahl auszusenden, in einem Lichtempfänger zu registrieren und zu bewerten, ob das Empfangssignal eine Schaltschwelle überschreitet oder nicht. In einem Lichtgitter werden effektiv mehrere Lichtschranken parallel zueinander zusammengefügt, wobei dann natürlich Teile der Schaltelektronik von mehreren Strahlen gemeinsam genutzt werden können. Es ist bekannt, Lichtgitter modular aufzubauen, was sich insbesondere in der Verwendung von optischen Modulen mit mehreren Linsen für mehrere nebeneinander liegende Strahlen äußert.

Die Genauigkeit der Positionierung des optischen Moduls auf seinem Träger, etwa einer Leiterkarte mit Sende- oder Empfangselementen, spielt eine zentrale Rolle für die Leistungsfähigkeit eines solchen Systems. Beispielsweise ändert sich die maximale Reichweite bei veränderter Position des optischen Moduls. Dementsprechend besteht der Wunsch, die Positionstoleranzen zu minimieren. Zugleich wird eine möglichst stabile, spielfreie Verbindung angestrebt, um robust gegenüber äußeren Einflüssen wie Schwingungen oder Schocks zu sein und einen dauerhaft zuverlässigen Betrieb zu gewährleisten.

Es ist bekannt, ein optisches Modul mit diversen Verbindungstechniken zu befestigen. Dazu zählen Verschrauben, Kleben, Kaltverstemmen, Heißverstemmen oder Klipsen. Das Verschrauben oder Kleben erfordert aber einen aufwändigen Fügeprozess während der Fertigung, während Verstemmen oder Klipsen zum Teil trotz aufwändiger Prozessqualifikation keine ausreichende Positionsgenauigkeit erzielt.

Die EP 1 180 697 B1 beschreibt eine Vorrichtung zum Erzeugen eines Lichtvorhangs, bei dem optische Module mit mehreren Tuben mittels Vorsprüngen in entsprechende Ausnehmungen einer Leiterplatte eingeschnappt werden.

In der DE 10 2005 046 359 A1 sind an einem Tubus zwei flexible Haken angeformt, mit denen ein transparentes Kunststoffgehäuse gehalten wird, in welches ein Lichtsende- oder Lichtempfängermodul eingegossen ist.

Aus der DE 10 2006 019 717 A1 ist ein optisches Modul bekannt, welches mit Hilfe von Schnapphaken und Zentrierstiften auf eine Leiterplatte geschnappt wird.

Diese Lösungen nehmen keine Rücksicht darauf, dass aufgrund optischer Randbedingungen und vorgegebener Größen der Sende- und Empfangsbauteile in der Praxis auf Sender- und Empfangsseite unterschiedliche Linsenabstände benötigt werden. Ein herkömmliches Optikmodul kann nur in einer Weise und damit nur in einem einzigen festen Linsenabstand befestigt werden. Möchte man den Abstand variieren, so muss ein anderes Optikmodul mit anderer Höhe verbaut werden.

Die US 2008/0130144 A1 B2 offenbart eine Kamera, bei der ein Objektivtubus mit einer Linse in einem für eine gewünschte Fokuslage passenden Abstand in einen Tubushalter eingesetzt wird. Dazu weisen Tubus und Tubushalter zueinander passende Rastleisten auf, die einen Eingriff in mehreren Raststellungen ermöglichen. Ist der passende Abstand gefunden, wird der Tubus in dem Tubushalter verklebt.

Es ist daher Aufgabe der Erfindung, eine zuverlässige Befestigung für ein optisches Modul an einem Träger zu schaffen, die zugleich flexibler ist.

Diese Aufgabe wird durch ein Verfahren zur Herstellung eines optoelektronischen Sensors nach Anspruch 12 gelöst. Dabei geht die Erfindung von dem Grundgedanken aus, das optische Modul mit Haltebügeln zu befestigen, die mindestens zwei Auflageelemente oder Auflageflächen in verschiedenen Höhen aufweisen. Dadurch kann das optische Modul als multifunktionaler Halter verwendet werden, indem sich wahlweise das eine oder das andere Auflageelement auf dem Träger abstützt. Die verschiedenen Höhen der Auflageelemente führen somit zu jeweils einem genau definierten Abstand des strahlformenden Elements zu dem Träger und insbesondere zu Lichtsendern oder Lichtempfängern auf dem Träger. Das strahlformende Element ist häufig eine Linse und wird deshalb im Folgenden so bezeichnet, kann aber auch beispielsweise ein anderes refraktives, diffraktives oder reflexives Element beziehungsweise eine Kombination solcher Elemente sein. Dabei bezieht sich der Abstand auf die relevante z-Richtung, die mit der optischen Achse der Linse zusammenfällt. Wenn von dem Abstand des optischen Moduls zu dem Träger gesprochen wird, ist damit regelmäßig der Linsenabstand gemeint, denn das optische Modul selbst muss zur Befestigung mit dem Träger in Kontakt kommen.

Die Träger, an denen das optische Modul befestigt wird, unterscheiden sich in ihren Auflageabschnitten je nachdem, in welchem Abstand das optische Modul die Linse unter Ausnutzung des jeweils geeigneten Auflageelements halten soll. Als Auflageabschnitt dient beispielsweise eine Ausfräsung einer Leiterplatte, auf dem je nachdem das erste Auflageelement oder das zweite Auflageelement aufliegt. Alternativ wäre auch denkbar, dass der gleiche Träger beide Sorten von Auflageelementen anbietet und für die Befestigung des optischen Moduls die für den gewünschten Abstand geeigneten Auflageelemente verwendet werden. Der eine Träger ist beispielsweise mit Empfangselementen anders gestaltet als der andere Träger mit Sendeelementen, so dass sich der sendeseitige und empfangsseitige Linsenabstand unterscheiden. Das optische Modul dagegen bleibt gleich, es wird lediglich einmal unter Verwendung der ersten Auflageelemente und einmal unter Verwendung der zweiten Auflageelemente befestigt. Die Träger sind vorzugsweise Leiterkarten.

Die Erfindung hat den Vorteil, dass das gleiche optische Modul für die Positionierung der Linse in verschiedenen Abständen geeignet ist. Dabei werden diese Abstände mit hoher Positionsgenauigkeit eingestellt, wodurch sich höhere Reichweiten erzielen lassen. Zugleich bleibt die Montage des optischen Moduls einfach und schnell und damit kostengünstig. Die spielfreie Verbindung gewährleistet eine hohe Widerstandskraft gegen Schwingungs- und Schockeinwirkungen.

Die Haltebügel sind bevorzugt mit Untermaß ausgeführt und unter Krafteinwirkung zur Überwindung der fehlenden Größe in ihre Halteposition gebracht. Dadurch befinden sich die Haltebügel in verbautem Zustand, nach Ende der Krafteinwirkung, unter Spannung, um eine spielfreie Verbindung in z-Richtung zu gewährleisten. Durch das Untermaß unterscheidet sich die Verbindung von einer einfachen Klipsverbindung und sichert eine spielfreie und genaue Halterung.

Das optische Modul weist bevorzugt mehrere Zapfen auf, um durch Eingriff in entsprechende Ausnehmungen des Trägers die laterale Position des optischen Moduls auf dem Träger festzulegen. Dabei bedeutet lateral die x- und y-Richtung senkrecht zu der durch die optische Achse der Linse gegebenen z-Richtung. Die entstehende hohe laterale Positionsgenauigkeit des optischen Moduls relativ zu dem Träger sorgt beispielsweise in einem Lichtgitter für ein genaues Strahlraster, einen geringen Schielwinkel zwischen benachbarten Strahlen, einen exakteren Verfügbarkeitswinkel und eine höhere Reichweite. Daraus folgen insbesondere in Verbindung mit dem genau eingestellten Abstand in z-Richtung weitere verbesserte Systemeigenschaften, wie erhöhte Umspiegelungsfestigkeit, geringere Zykluszeit bei dem üblichen sequentiellen Aktivieren der einzelnen Strahlen des Lichtgitters, erweiterter Kreuzstrahleinsatz und ein geringerer Mindestabstand zu einem anderen Lichtgitter.

Die Zapfen weisen bevorzugt einen ersten Teilbereich und einen zweiten Teilbereich auf, und der Eingriff in die Ausnehmung bei Befestigung des optischen Moduls in dem ersten Abstand und dem zweiten Abstand ist durch die Teilbereiche bestimmt. Der jeweilige Träger sieht dazu vorzugsweise eine Ausnehmung vor, beispielsweise ein Bohrloch eines bestimmten Durchmessers, die selektiv mit nur einem durch die beiden Teilbereiche bestimmten Übergang in Eingriff kommt. Damit dienen neben den Auflageelementen auch die Zapfen dazu, die beiden unterschiedlichen Abstände zwischen Linse und Träger einzustellen.

Das optische Modul weist bevorzugt mindestens einen Tubus auf. Der Tubus dient der optischen Abschirmung gegenüber Streulicht, das nicht durch die Linse fällt.

Strahlformendes Element beziehungsweise Linse und Tubus sind vorzugsweise lösbar miteinander verbunden. Das erleichtert die getrennte Herstellung der beiden Komponenten Linse und Tubus des optischen Moduls. Eine lösbare Verbindung, beispielsweise eine Schnappverbindung, ist gegenüber Kleben oder anderen Verbindungen besser zu handhaben. Dennoch ist alternativ auch eine feste Verbindung denkbar, etwa durch Zweikomponenten-Spritzguss.

Die strahlformenden Elemente des optischen Moduls bilden bevorzugt ein Linsenarray. Dann kann das optische Modul in einem Arraysensor, insbesondere als Linienanordnung in einem Lichtgitter eingesetzt werden. Mit dem Linsenarray korrespondierend weist das optische Modul vorzugsweise auch ein Tubusarray auf, welches Linsen und Tuben einander paarweise zuordnet. Dabei ist eine direkte Korrespondenz von Linsen und Tuben nicht zwingend, beispielsweise kann prinzipiell auch ein dichteres Linsenarray Verwendung finden, von dem dann nur jede zweite Linse genutzt wird, und entsprechend enthält das zugehörige Tubusarray nur halb so viele Tuben.

Die Träger weisen bevorzugt mehrere Ausnehmungen auf, welche jeweils für den Eingriff des ersten Teilbereichs eines Zapfens oder jeweils für den Eingriff des zweiten Teilbereichs eines Zapfens ausgebildet sind. Die Ausnehmungen, beispielsweise Bohrlöcher unterschiedlichen Durchmessers, sind dabei wie die Auflageelemente so ausgebildet, dass das optische Modul gezielt entsprechend dem ersten Abstand oder dem zweiten Abstand befestigt werden kann.

Der Träger weist bevorzugt mindestens einen Lichtsender oder mindestens einen Lichtempfänger auf. Typischerweise wird empfängerseitig ein anderer Linsenabstand benötigt als senderseitig, und dies wird durch das für Befestigung in einem von zwei Abständen ausgebildete optische Modul erreicht.

In bevorzugter Weiterbildung ist eine Lichtschranke oder ein Lichtgitter vorgesehen, welches mindestens eine erfindungsgemäße Anordnung aufweist. Insbesondere ist darin ein Sendemodul mit einem Träger, welcher einen oder mehrere Lichtsender und ein in dem ersten Abstand befestigtes optisches Modul aufweist, sowie ein Empfangsmodul mit einem Träger vorgesehen, welcher einen oder mehrere Lichtempfänger und ein in dem zweiten Abstand befestigtes optisches Modul aufweist.

Bei dem erfindungsgemäßen Herstellungsverfahren wird ein optisches Modul, insbesondere ein optisches Modul gemäß einer der beschriebenen Ausführungsformen, an einem jeweiligen Träger befestigt, der durch Gestaltung seiner Auflageabschnitte für die Befestigung des optischen Moduls in dem ersten Abstand oder dem zweiten Abstand ausgebildet ist.

Dabei werden vorzugsweise Zapfen des optischen Moduls zur Festlegung der lateralen Position des optischen Moduls auf dem Träger in Ausnehmungen des Trägers geführt, wobei entweder ein erster Teilbereich der Zapfen in entsprechend für den ersten Teilbereich des einen Trägers oder ein zweiter Teilbereich der Zapfen in entsprechend für den zweiten Teilbereich ausgebildete Ausnehmungen des anderen Träger eingreift und so erneut der erste Abstand oder der zweite Abstand eingestellt wird. Die Zapfen und Ausnehmungen sind demnach auf die gleichen Abstände abgestimmt wie die Auflageelemente und Auflageabschnitte.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine dreidimensionale Ansicht eines optischen Moduls;
- Fig. 2: eine Draufsicht auf das Modul gemäß Figur 1;
- Fig. 3: eine Seitenansicht des Moduls gemäß Figur 1;
- Fig. 4: eine dreidimensionale Ansicht einer Anordnung von in einem ersten Abstand auf einer Leiterplatte befestigten optischen Modulen gemäß Figur 1;
- Fig. 5a-b: Detailansichten der Befestigung eines optischen Moduls an einer Leiterplatte in dem ersten Abstand;
- Fig. 6: eine dreidimensionale Ansicht einer Anordnung von in einem zweiten Abstand auf einer Leiterplatte befestigten optischen Modulen gemäß Figur 1;
- Fig. 7: eine Detailansicht der Befestigung eines optischen Moduls an einer Leiterplatte in dem zweiten Abstand; und
- Fig. 8: eine schematische Schnittdarstellung eines herkömmlichen Lichtgitters.

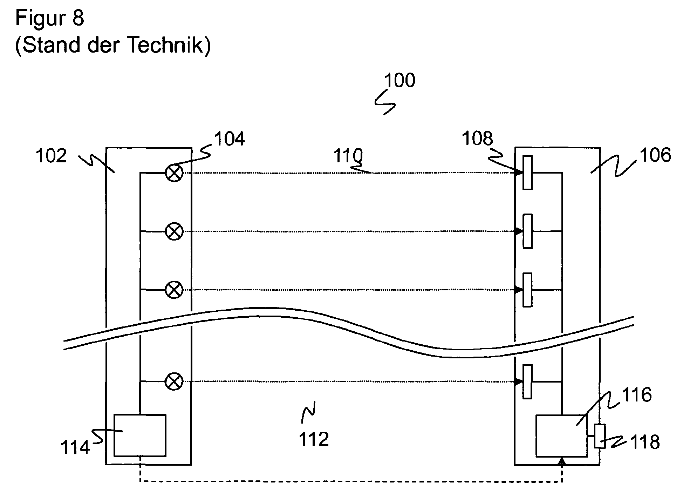

Figur 8 zeigt eine vereinfachte Schnittdarstellung durch ein herkömmliches Lichtgitter 100. Eine Sendeeinheit 102 mit einer Vielzahl von Lichtsendern 104 und eine Empfangseinheit 106 mit einer Vielzahl von Lichtempfängern 108 sind einander gegenüberstehend angeordnet. Von den Lichtsendern 104 wird jeweils ein Lichtstrahl 110 zu einem zugeordneten Lichtempfänger 108 ausgesandt. Somit spannt das Lichtgitter 100 eine Vielzahl von Lichtstrahlen 110 auf, um Objekte in einem Überwachungsbereich 112 zwischen der Sendeeinheit 102 und der Empfangseinheit 106 zu erkennen.

In der Sendeeinheit 102 ist eine Sendesteuerung vorgesehen, um die Aktivität der Lichtsender 104 zu steuern. Als Gegenstück ist in der Empfangseinheit 106 eine Auswertungseinheit 116 vorgesehen, um die Empfangssignale auszuwerten. Anhand der Empfangssignale erkennt die Auswertungseinheit 116, welche Lichtstrahlen 110 unterbrochen sind und welche nicht.

Bei der Herstellung eines solchen Lichtgitters 100 müssen an den Lichtsendern 104 und den Lichtempfängern 108 Optiken angeordnet werden. Solche Optiken umfassen üblicherweise zumindest eine Sammellinse, um sendeseitig einen kollimierten Lichtstrahl 110 zu erzeugen und diesen empfangsseitig zu bündeln. Ein weiteres häufig verwendetes Element der Optiken ist ein Tubus, welcher eine Art Führung oder Trichter aus lichtundurchlässigem Material bildet und so den internen Strahlenweg zwischen Linse und Lichtsender 104 beziehungsweise Lichtempfänger 108 nach außen abschirmt. Solche Optiken werden mit Hilfe von optischen Modulen montiert, wobei zur vereinfachten Herstellung mehrere Optiken in einem optischen Modul zusammengefasst werden können.

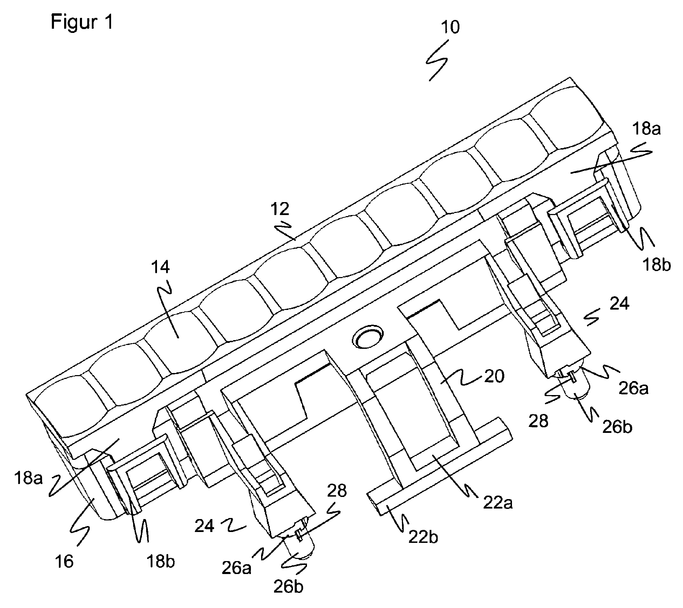

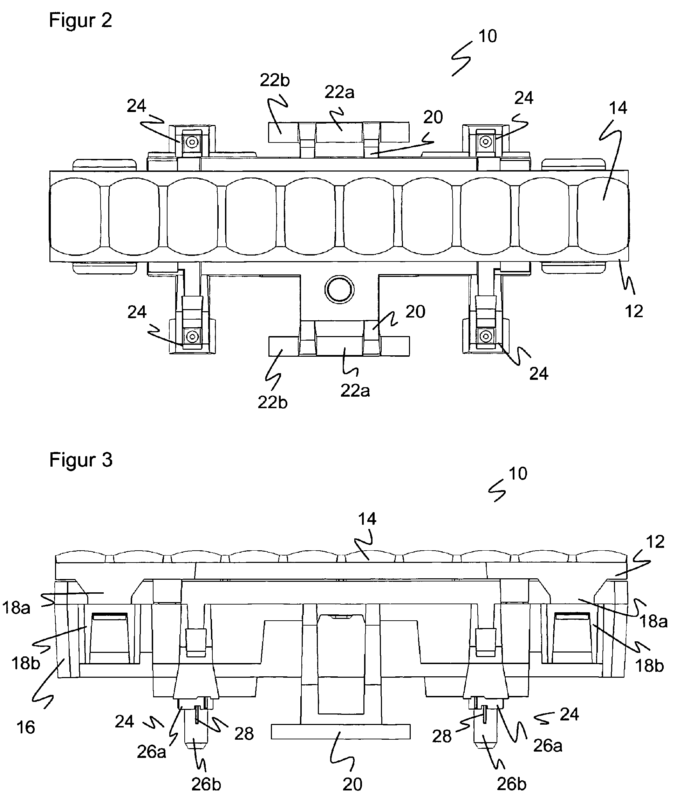

Die Figuren 1 bis 3 zeigen ein optisches Modul 10 in dreidimensionaler Ansicht, Draufsicht und Seitenansicht. Das optische Modul 10 umfasst ein Linsenarray 12 mit einer Vielzahl von Linsen 14 und ein Tubusarray 16 mit einer entsprechenden Vielzahl von aufgrund der Darstellung weitgehend verdeckten Tuben. Die Erfindung ist aber auf eine bestimmte Gestaltung der Tuben ohnehin nicht festgelegt. In dem dargestellten Modul 10 sind zehn Linsen 14 und zugehörige Tuben vorgesehen, es können darüber also zehn Lichtstrahlen 110 ausgesandt oder empfangen werden. Diese Anzahl ist rein beispielhaft, es sind optische Module 10 mit einer Linse 14, zwei Linsen 14 oder jeder anderen Anzahl Linsen 14 denkbar. Außerdem kann die Anzahl durch Aneinanderreihung mehrerer optischer Module 10 erhöht werden, beispielsweise um ein Lichtgitter 100 bestimmter Länge und bestimmten Strahlabstands aufzubauen.

Das Linsenarray 12 ist mit dem Tubusarray 16 über Schnappverbindungen 18a-b verschnappt. Durch diesen zweiteiligen Aufbau können Linsenarray 10 und Tubusarray 14 getrennt hergestellt und einfach verbunden werden. Alternativ ist denkbar, ein optisches Modul 10 nur mit einem Linsenarray 12 ohne Tubusarray 16 zu verwenden oder das Linsenarray 12 fest mit dem Tubusarray 16 zu verbinden, etwa durch Herstellung als Zweikomponenten-Spritzgussteil.

Das optische Modul 10 umfasst zwei Klemmbügel oder Haltebügel 20, die einander gegenüber angeordnet sind. Eine abweichende Anzahl von Haltebügeln 20 sowie deren versetzte Anordnung sind aber ebenfalls denkbar. Die Haltebügel 20 weisen in unterschiedlicher Höhe und damit unterschiedlichem Abstand zu den Linsen 14 eine erste Auflagefläche 22a und eine zweite Auflagefläche 22b auf. Dabei bezieht sich der Abstand auf die z-Richtung parallel zu den optischen Achsen der Linsen 14.

Zusätzlich umfasst das optische Modul 10 vier Zapfen 24. Die Zapfen 24 haben einen ersten Teilbereich 26a und einen zweiten Teilbereich 26b, die jeweils als Zylinder unterschiedlichen Durchmessers ausgebildet sind. Dadurch entstehen Auflagebereiche an dem Übergang zwischen den beiden Teilbereichen 26a-b sowie am oberen Ende des ersten Teilbereichs 26a, deren Abstand untereinander gerade dem Höhenunterschied zwischen den Auflageflächen 22a-b der Haltebügel 20 entspricht. Erneut ist die Anzahl der Zapfen 24 rein beispielhaft zu verstehen. Auch andere Formgebungen sind denkbar, etwa ein Vieleck statt eines Kreises als Grundfläche, was zu einem prismenförmigen Zapfen 24 führt, oder eine Veränderung der Querschnittsfläche mit der Höhe wie bei einem Konus. Die Zapfen 24 können außerdem optional mit Verdrängungsrippen 28 versehen sein, wobei deren Form und Anzahl ebenfalls variabel ist.

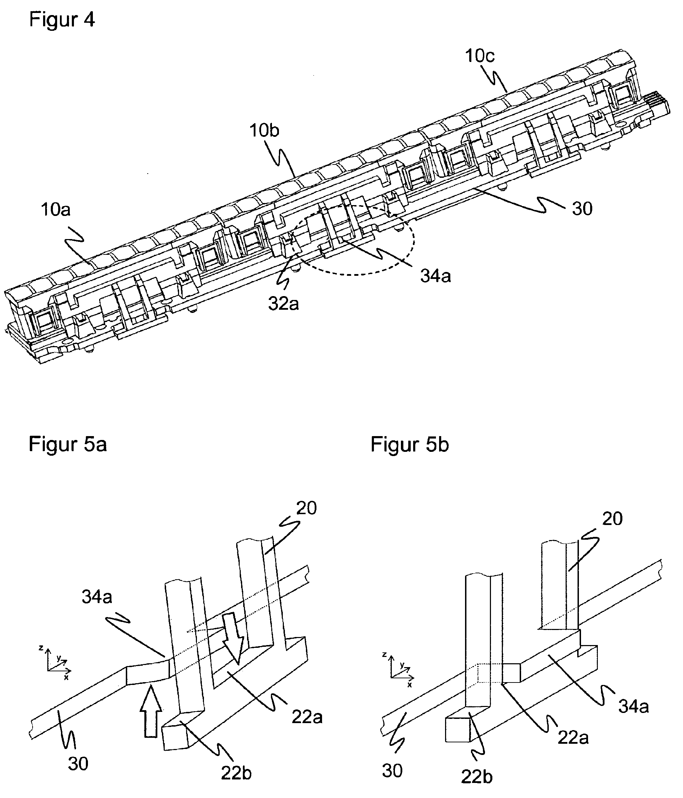

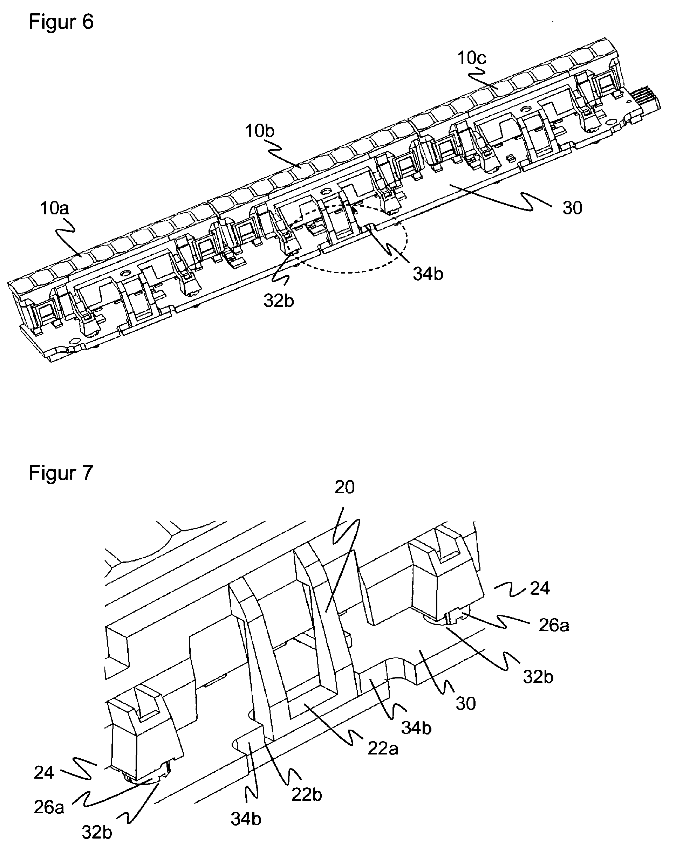

Figur 4 zeigt eine dreidimensionale Ansicht einer Anordnung von drei derartigen optischen Modulen 10a-c, die an einem Träger 30 befestigt sind. Die Befestigung erfolgt in Figur 4 so, dass ein erster Abstand der Linsen 14 eingestellt wird. Die weiter unten erläuterte Figur 6 zeigt ein weiteres Beispiel einer Befestigung mit einem größeren zweiten Abstand der Linsen 14. Der Träger 30 ist in Figur 4 beispielsweise eine Leiterkarte mit Lichtempfängern 108, so dass der funktionelle Kern einer Empfangseinheit 106 eines Lichtgitters 100 mit hier dreißig Lichtstrahlen 110 entsteht. Die Verwendung der optischen Module 10 ist aber nicht auf Leiterplatten für Lichtgitter 100 beschränkt, sondern der Träger 30 kann auch ein anderes Bauteil beispielsweise aus Kunststoff, Metall oder Keramik in einer anderen Anwendung sein.

Die Befestigung eines optischen Moduls 10a-c an dem Träger 30 in dem ersten Abstand wird nun anhand einer Detailansicht gemäß Figur 5a-b des in Figur 4 mit einem Kreis gekennzeichneten Ausschnitts erläutert. Wie in Figur 5a dargestellt, werden die Haltebügel 20 vorzugsweise maschinell nach außen bewegt, und der Träger 30 wird so eingelegt, dass die Zapfen 24 in Bohrlöcher 32a des Trägers 30 hineinragen. Die Bohrlöcher 32a sind so groß dimensioniert, dass beide Teilabschnitte 26a-b der Zapfen 24 eindringen können und der Zapfen erst an dem oberen Übergang des ersten Teilabschnitts 26a auf dem Träger 30 aufliegt. Die Verdrängungsrippen 28 sorgen für eine spielfreie Verbindung in der lateralen x-y-Richtung senkrecht zu den optischen Achsen der Linsen 14.

Der Träger 30 weist an seiner Außenkante Ausfräsungen 34a auf, die so dimensioniert sind, dass ein Aufliegen auf der ersten Auflagefläche 22a ermöglicht wird. Um nun die Haltebügel 20 in ihre finale Position zu bewegen, wird auf die Haltebügel 20 und/oder den Träger 30 eine Kraft ausgeübt, die in Figur 5a durch Pfeile symbolisiert ist. Nachdem die Befestigungsposition gemäß Figur 5b erreicht ist, wird die äußere Kraft nicht länger aufrechterhalten, und es ergibt sich eine spielfreie Verbindung. Die Auflagen der Ausfräsung 34a auf der ersten Auflagefläche 22a und des Übergangs zwischen erstem Teilbereich 26a und zweitem Teilbereich 26b entsprechen einander in der Höhe und stellen beide den gewünschten ersten Abstand der Linse 14 zu dem Träger und den dort beispielsweise vorhandenen Empfängern ein. Die Haltebügel 20 sind vorzugsweise mit Untermaß designt und befinden sich in verbautem Zustand unter Spannung, um eine spielfreie Verbindung in z-Richtung zu gewährleisten. Zusätzlich kann dadurch die Dickentoleranz der Elektronikkarte ausgeglichen werden. Außerdem werden die Haltebügel 20 vorzugsweise durch ihre Geometrie oder Oberflächeneigenschaften so gestaltet, dass sie im verbauten Zustand nicht von dem Träger 30 abrutschen können.

Figur 6 zeigt eine dreidimensionale Ansicht einer Anordnung von drei optischen Modulen 10a-c, die an einem Träger 30 befestigt sind. Im Unterschied zu Figur 4 erfolgt hier die Befestigung so, dass ein zweiter Abstand der Linsen 14 eingestellt wird. Dabei unterscheidet sich der Träger 30 von demjenigen gemäß Figur 4, nicht aber das optische Modul 10a-c, welches in identischer Weise ausgebildet und dennoch für eine Befestigung wahlweise für den ersten Abstand oder den zweiten Abstand geeignet ist. Der Träger 30 ist hier beispielsweise eine Leiterkarte mit Lichtsendern 104, so dass der funktionelle Kern einer Sendeeinheit 102 eines Lichtgitters 100 entsteht.

Die Befestigung des optischen Moduls 10 für den zweiten Abstand wird in Figur 7 in einer Detailansicht illustriert, welche dem in Figur 6 bezeichneten Ausschnitt entspricht.

Die Zapfen 24 dringen in diesem Fall nur so tief in die Bohrlöcher 32b ein, bis der Übergang zwischen dem ersten Teilbereich 26a und dem zweiten Teilbereich 26b auf dem Träger 30 aufliegt. Der breitere erste Teilbereich 26a passt nicht mehr in das eigens so dimensionierte Bohrloch 32b, so dass die Linsen 14 durch das Aufliegen des Übergangs in dem zweiten Abstand gehalten werden.

Entsprechend sind auch Ausfräsungen 34b des Trägers 30 anders gestaltet als im Beispiel der Figur 4, nämlich so, dass die Ausfräsungen 34b auf der zweiten Auflagefläche 22b aufliegen. Die Linsen 14 werden somit durch die Haltebügel 20 in dem zweiten Abstand gehalten. Der zweite Abstand wird wie beschrieben durch die Zapfen 24 unterstützt, wobei auch Ausführungsformen denkbar sind, in denen die Zapfen 24 den Abstand nicht erneut festlegen oder ganz weggelassen werden, wobei dann die Fixierung in x-y-Richtung anders sichergestellt wird.

Somit bietet das identische optische Modul 10 die Möglichkeit, zwei unterschiedliche Abstände der Linsen 14 einzustellen. Dazu werden jeweils die Träger 30 mit zu dem gewünschten Abstand passenden Bohrlöchern 32a-b und Ausfräsungen 34a-b versehen. Denkbar ist auch, an einem Träger 30 beide Befestigungsmöglichkeiten anzubieten und während der Montage auszuwählen.

Der wählbare Abstand kann insbesondere genutzt werden, um den Abstand der Linsen 14 für Sende- und Empfangselemente unabhängig einzustellen. Damit kann dasselbe optische Modul auf Sender- und Empfängerseite verwendet werden. Mittels eines Sonderbetriebsmittels, welches simultan eine Reihe der optischen Module 10 mit dem Träger 30 verbindet, können in der Fertigung auch lange Anordnungen wie Sendeeinheiten 102 oder Empfangseinheiten 106 schnell gefertigt werden. Im übrigen ist denkbar, optische Module 10 in einem Lichtgitter 100 nur sendeseitig oder nur empfangsseitig einzusetzen und auf der gegenüberliegenden Seite darauf zu verzichten. Dadurch können Varianten mit besseren Kreuzstrahleigenschaften oder geringeren Herstellkosten geschaffen werden. Weiterhin ist nach dem beschriebenen Prinzip zur Befestigung eines optischen Moduls 10 in einem von zwei wählbaren Abstand auch denkbar, Konstruktionen des optischen Moduls 10 beziehungsweise des Trägers 30 anzugeben, mit denen mehr als zwei Abstände durch dasselbe optische Modul 10 erreicht werden können.

## Patentansprüche

1. Verfahren zur Herstellung eines optoelektronischen Sensors (100), bei dem mindestens zwei Haltebügel (20) eines optischen Moduls (10) mit mindestens einem strahlformenden Element (14), die ein erstes Auflageelement (22a) in einem ersten Abstand zu dem strahlformenden Element (14) und ein zweites Auflageelement (22b) in einem zweiten Abstand ungleich dem ersten Abstand zu dem strahlformenden Element (14) aufweisen, auseinandergebogen werden, entweder ein erster Träger (30) eingeschoben wird, der mindestens einen Auflageabschnitte (34a) aufweist, mit dem das erste Auflageelement (22a) in Eingriff kommt, oder ein zweiter Träger (30) eingeschoben wird, der mindestens einen Auflageabschnitt (34b) aufweist, mit dem das zweite Auflageelement (22b) in Eingriff kommt, und die Haltebügel (20) wieder entlastet oder zusammengedrückt werden, um das optische Modul (10) an dem Träger (30) zu befestigen so dass mit Befestigen des optischen Moduls (10) an dem Träger (30) wallweise ein erster Abstand oder ein zweiter Abstand zwischen strahlformendem Element (14) und Träger (30) eingestellt wird.

2. Verfahren nach Anspruch 1,
wobei Zapfen (24) des optischen Moduls (10) zur Festlegung der lateralen Position des optischen Moduls (10) auf dem Träger (30) in Ausnehmungen (32a-b) des Trägers (30) geführt werden, wobei entweder ein erster Teilbereich (26a) der Zapfen (24) in entsprechend für den ersten Teilbereich (26a) ausgebildete Ausnehmungen (30a) des ersten Trägers (30) oder ein zweiter Teilbereich (26b) der Zapfen (24) in entsprechend für den zweiten Teilbereich (26b) ausgebildete Ausnehmungen (32b) des zweiten Trägers (30) eingreift und so der erste Abstand oder der zweite Abstand eingestellt wird.

## Claims

1. A method for the manufacture of an optoelectronic sensor (100), wherein at least two retainer brackets (20) of an optical module (10) having at least one beam-forming element (14) are bent apart, the retainer brackets (20) having a first support element (22a) at a first spacing with respect to the beam-forming element (14) and a second support element (22b) at a second spacing with respect to the beam forming-element (14), with the first spacing being different from the first spacing,
either a first carrier (30) having at least one support section (34a) engaging with the first support element (22a) or a second carrier (30) having at least one support section (34b) engaging with the second supporting element (22b) is inserted,
and the retainer brackets (20) are released or pressed together in order to fasten the optical module (10) to the carrier (30), such that a first spacing or a second spacing is selectively set between the beam forming element (14) and the carrier (30) on fastening of the optical module (10) to the carrier (30).

2. The method in accordance with claim 1,
wherein stubs (24) of the optical module (10) are guided in recesses (32a-b) of the carrier (30) for determining the lateral position of the optical module (10) at the carrier (30), wherein either a first part region (26a) of the stubs (24) engages into recesses (32a) of the first carrier (30) configured corresponding to the first part region (26) or a second part region (26) of the stubs (24) engages into recesses (32b) of the second carrier (30) configured corresponding to the second part region (26b), thus setting the first spacing or the second spacing.

## Revendications

1. Procédé pour la fabrication d'un capteur optoélectronique (100), dans lequel on cintre en les écartant au moins deux arceaux de maintien (20) d'un module optique (10) avec au moins un élément de mise en forme de faisceau (14), qui comprennent un premier élément d'appui (22a) à une première distance de l'élément de mise en forme de faisceau (14) et un second élément d'appui (22b) à une seconde distance, différente de la première distance, de l'élément de mise en forme de faisceau (14), on enfile soit un premier support (30), qui comprend au moins une portion d'appui (34a) avec laquelle le premier élément d'appui (22a) vient en engagement, soit un second support (30), qui comprend au moins une portion d'appui (34b) avec laquelle le second élément d'appui (22b) vient en engagement, et les arceaux de maintien (20) sont à nouveau déchargés ou poussés en rapprochement, afin de fixer le module optique (10) sur le support (30), de sorte qu'en fixant le module optique (10) sur le support (30) on établit sélectivement une première distance ou une seconde distance entre l'élément de mise en forme de faisceau (14) et le support (30).

2. Procédé selon la revendication 1,
dans lequel des tenons (24) du module optique (10), pour l'immobilisation de la position latérale du module optique (10) sur le support (30), sont guidés dans des évidements (32a-b) du support (30), et soit une première zone partielle (26a) des tenons (24) s'engage dans des évidements (30a), réalisés de façon correspondante pour la première zone partielle (26a), du premier support (30), soit une seconde zone partielle (26b) des tenons (24) s'engage dans des évidements (32b), réalisés de façon correspondante pour la seconde zone partielle (26b), du second support (30) et on établit ainsi la première distance ou la seconde distance.
